# EUROPEAN PATENT APPLICATION

(11) **EP 4 571 884 A1**
(43) Date of publication of application: **18.06.2025**
(21) Application number: 23862195.7
(22) Date of filing: 24.08.2023
(51) Int. Cl.: H01M 4/505, H01M 10/0525, C01G 45/12

(54) **SPINEL-TYPE LITHIUM-MANGANESE-CONTAINING COMPOSITE OXIDE AND PREPARATION METHOD THEREFOR, POSITIVE ELECTRODE SHEET, SECONDARY BATTERY, AND ELECTRIC DEVICE**

(30) Priority: 09.09.2022 WO PCT/CN2022/118189
(71) Applicant: CONTEMPORARY AMPEREX TECHNOLOGY (HONG KONG) LIMITED, Hong Kong (HK)
(72) Inventor: ZHANG, Zhenguo, Ningde, Fujian 352100 (CN); WANG, Sihui, Ningde, Fujian 352100 (CN); YIN, Xiang, Ningde, Fujian 352100 (CN); YAO, Zhijie, Ningde, Fujian 352100 (CN); LIU, Na, Ningde, Fujian 352100 (CN)
(74) Representative: Herrmann, Uwe
(86) International application number: PCT/CN2023/114752
(87) International publication number: WO 2024/051499

(57) **Abstract**

A spinel-type lithium and manganese containing composite oxide is provided, with a chemical composition of Li₁₊ₓM_{y}Mn_{2-y}O₄₋ₖ, where -0.1<x<0.2; 0≤y≤0.3; 0≤k≤0.2; and M includes at least one of B, Na, Mg, Al, Si, P, K, Ti, V, Cr, Fe, Co, Ni, Cu, Zr, Mo, W, and Te. Crystal grains of the spinel-type lithium and manganese containing composite oxide have a quasi-spherical morphology. A surface of a single crystal grain is formed by a continuous curved surface that is connected to a finite surface with a profile circumscribed by the continuous curved surface, or is a continuous curved surface. A quantity of observable finite surfaces with the profile circumscribed by the continuous curved surface in a SEM image of a single crystal grain is ≤ 5; and a ratio of a diameter dA of the finite surface with the profile circumscribed by the continuous curved surface to a diameter dV of the crystal grain satisfies dA/dV<0.5, optionally dA/dV≤0.3.

## Description

### CROSS-REFERENCE TO RELATED APPLICATIONS

This application claims priority to the PCT patent application No. PCT/CN2022/118189, filed on September 9, 2022 and entitled "SPINEL-TYPE LITHIUM AND MANGANESE CONTAINING COMPOSITE OXIDE, PREPARATION METHOD THEREOF, POSITIVE ELECTRODE PLATE, SECONDARY BATTERY, AND ELECTRIC APPARATUS", which is incorporated herein by reference in its entirety.

### TECHNICAL FIELD

This application relates to the field of secondary batteries, and in particular, to a spinel-type lithium and manganese containing composite oxide, a preparation method thereof, a positive electrode plate, a secondary battery, and an electric apparatus.

### BACKGROUND

Lithium-ion batteries, with their characteristics such as high energy density, good cycling performance, and high average output voltage, have been widely used in the fields of electric vehicles, electronic consumer products, and the like. A positive electrode active material is a material capable of intercalating and deintercalating lithium ions in a lithium-ion battery. Manganese-rich lithium-containing positive electrode materials have advantages such as low price, high energy density, environmental friendliness, and high safety performance, where spinel-structured lithium manganese oxide is outstanding in cost advantage and safety performance due to its low Li content. However, conventional spinel lithium manganese oxide has a sharp crystal morphology and thus is prone to cracking and stress corrosion, affecting the electrochemical performance of lithium-ion batteries.

### SUMMARY

In view of the foregoing problems, this application provides a spinel-type lithium and manganese containing composite oxide, a preparation method thereof, a positive electrode plate, a secondary battery, and an electric apparatus. Crystal grains of the spinel-type lithium and manganese containing composite oxide are not prone to cracking or corrosion. Therefore, when used for preparing a secondary battery, the spinel-type lithium and manganese containing composite oxide can prolong the service life of the secondary battery.

According to an aspect of this application, a spinel-type lithium and manganese containing composite oxide with a chemical composition of Li₁₊ₓM_{y}Mn_{2-y}O₄₋ₖ is provided, where -0.1<x<0.2; 0≤y≤0.3; 0≤k≤0.2; M includes at least one of B, Na, Mg, Al, Si, P, K, Ti, V, Cr, Fe, Co, Ni, Cu, Zr, Mo, W, and Te; crystal grains of the spinel-type lithium and manganese containing composite oxide have a quasi-spherical morphology; a surface of a single crystal grain is a continuous curved surface, or is formed by a continuous curved surface and a finite surface with a profile circumscribed by the continuous curved surface; and in a SEM image with an overall visual field size of D_{V50} to 10D_{V50}, a quantity of observable finite surfaces in a single crystal grain is ≤ 5, and a ratio of a diameter dA of the finite surface to a diameter dV of the crystal grain satisfies dA/dV<0.5.

In some embodiments, dA/dV<0.3.

In some embodiments, no connected finite surfaces are present on the surface of a single crystal grain.

In some embodiments, a ratio of a long diameter L to a short diameter S of a crystal grain of the spinel-type lithium and manganese containing composite oxide satisfies 1≤L/S≤1.3.

In some embodiments, 1≤L/S≤1.2, or 1<L/S<1.1.

In some embodiments, the spinel-type lithium and manganese containing composite oxide has a monocrystal or quasi-monocrystal particle morphology.

In some embodiments, a ratio of an average crystal grain diameter d_{V50} of the spinel-type lithium and manganese containing composite oxide to a median particle size by volume D_{V50} of a powder particle satisfies 0.3≤d_{V50}/D_{V50}≤1.

In some embodiments, 0.4≤d_{V50}/D_{V50}≤1, 0.5≤d_{V50}/D_{V50}≤1, or 0.6≤d_{V50}/D_{V50}≤1.

In some embodiments, the D_{V50} of the spinel-type lithium and manganese containing composite oxide is 2 micrometers (µm) to 20 micrometers (µm).

In some embodiments, the D_{V50} of the spinel-type lithium and manganese containing composite oxide is 3 µm to 15 µm.

In some embodiments, M includes at least two of Na, Al, P, Mo, W, and Te, and 0<y<0.3.

In some embodiments, 0.001≤y≤0.1.

In some embodiments, 0.005≤y≤0.05.

According to a second aspect, this application further provides a preparation method of the foregoing spinel-type lithium and manganese containing composite oxide. The preparation method includes the following steps:
preparing raw materials according to the chemical composition of the spinel-type lithium and manganese containing composite oxide;
mixing the raw materials, and performing a first heat treatment in an oxygen-containing atmosphere to prepare an intermediate; and
performing a second heat treatment on the intermediate in the oxygen-containing atmosphere; where
the first heat treatment is performed at a temperature of T1 for 2 hours (h) to 50 hours (h); the second heat treatment is performed at a temperature of T2 for 0.5 h to 20 h; and
T1 and T2 satisfy: 800 degrees Celsius (°C)≤T1≤1100 degrees Celsius (°C), T1-200°C<T2<T1, and T2≥800°C.

In some embodiments, T1 and T2 satisfy: T1-100°C<T2<T1.

In some embodiments, T1 and T2 satisfy: 850°C≤T1≤950°C.

In some embodiments, after the first heat treatment step, the preparation method further includes: a step of cooling a reaction system to room temperature to obtain the intermediate, where the room temperature is 20°C to 45°C.

In some embodiments, a volume content of oxygen in the oxygen-containing atmosphere is greater than or equal to 20%.

In some embodiments, the oxygen-containing atmosphere is air.

In some embodiments, the raw materials include a lithium-containing compound and a manganese-containing compound.

In some embodiments, the raw materials further include a doping element compound, where a doping element M in the doping element compound includes at least one of B, Na, Mg, Al, Si, P, K, Ti, V, Cr, Fe, Co, Ni, Cu, Zr, Mo, W, and Te.

In some embodiments, the lithium-containing compound includes at least one of lithium carbonate, lithium oxide, lithium hydroxide, and lithium nitrate; and the manganese-containing compound includes at least one of trimanganese tetroxide, manganese carbonate, manganese sesquioxide, and manganese hydroxide.

According to a third aspect, this application further provides a spinel-type lithium and manganese containing composite oxide with a chemical composition of Li₁₊ₓM_{y}Mn_{2-x-y}O₄₋ₖ, where -0.1 ≤x≤0.2; 0≤y≤0.3; 0≤k≤0.2; M includes at least one of B, Na, Mg, Al, Si, P, K, Ti, V, Cr, Fe, Co, Ni, Cu, Zr, Mo, W, and Te; crystal grains of the spinel-type lithium and manganese containing composite oxide have a quasi-spherical morphology; a surface of a single crystal grain is formed by a continuous curved surface that is connected to a finite surface with a profile circumscribed by the continuous curved surface, or is a continuous curved surface; a quantity of observable finite surfaces with the profile circumscribed by the continuous curved surface in a SEM image of a single crystal grain is ≤ 5; and a ratio of a diameter dA of the finite surface to a diameter dV of the crystal grain satisfies dA/dV<0.5.

According to a fourth aspect, this application further provides a positive electrode plate including the spinel-type lithium and manganese containing composite oxide according to the first aspect or the spinel-type lithium and manganese containing composite oxide prepared by using the preparation method of the spinel-type lithium and manganese containing composite oxide according to the second aspect.

According to a fifth aspect, this application further provides a secondary battery including the positive electrode plate according to the third aspect.

According to a sixth aspect, a battery module is provided, including the secondary battery according to the fourth aspect.

According to a seventh aspect, a battery pack is provided, including at least one of the secondary battery according to the fifth aspect and the battery module according to the sixth aspect.

According to an eighth aspect, an electric apparatus is provided, including at least one selected from the secondary battery according to the fifth aspect, the battery module according to the sixth aspect, and the battery pack according to the seventh aspect.

The crystal grains of the spinel-type lithium and manganese containing composite oxide in this application have a quasi-spherical morphology, which can prevent the crystal grain surface of the spinel-type lithium and manganese containing composite oxide from cracking and being corroded due to stress concentration, reduce Mn dissolution, and reduce gas generation, thereby prolonging the service life of the secondary battery.

Details of one or more embodiments of this application are illustrated in the following drawings and descriptions, and other features, objects, and advantages of this application will become apparent from the descriptions, drawings, and claims.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts. In the accompanying drawings:
FIG. 1 is a scanning electron microscope (SEM) image of a spinel-type lithium and manganese containing composite oxide according to an embodiment of this application;
FIG. 2 is a schematic diagram of a secondary battery according to an embodiment of this application;
FIG. 3 is an exploded view of the secondary battery according to the embodiment of this application in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to the embodiment of this application in FIG. 5; and
FIG. 7 is a schematic diagram of an electric apparatus using a secondary battery according to an embodiment of this application as a power source.

Description of reference signs:
1. battery pack; 2. upper box body; 3. lower box body; 4. battery module; 5. secondary battery; 51. housing; 52. electrode assembly; 53. cover plate; and 6. electric apparatus.

### DESCRPTION OF EMBODIMENTS

To facilitate the understanding of this application, this application is described more comprehensively with reference to the relevant accompanying drawings. Preferred embodiments of this application are provided in the accompanying drawings. However, this application can be implemented in many different forms and is not limited to the embodiments described herein. On the contrary, these embodiments are provided for a more thorough understanding of the disclosure of this application.

Unless otherwise defined, all technical and scientific terms used herein shall have the same meanings as commonly understood by those skilled in the art to which this application pertains. The terms used in the specification of this application are merely intended to describe specific embodiments rather than to limit this application. The term "and/or" used herein includes any and all combinations of one or more associated items listed.

This application provides a spinel-type lithium and manganese containing composite oxide and a preparation method thereof, as well as a positive electrode plate, a secondary battery, a battery module, a battery pack, and an electric apparatus using such spinel-type lithium and manganese containing composite oxide. Such secondary battery is applicable to various electric apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

An embodiment of this application provides a spinel-type lithium and manganese containing composite oxide with a chemical composition of Li₁₊ₓM_{y}Mn_{2-y}O₄₋ₖ, where -0.1<x<0.2, 0≤y≤0.3, 0≤k≤0.2, and M includes at least one of B, Na, Mg, Al, Si, P, K, Ti, V, Cr, Fe, Co, Ni, Cu, Zr, Mo, W, and Te; Crystal grains of the spinel-type lithium and manganese containing composite oxide have a quasi-spherical morphology. A surface of a single crystal grain is a continuous curved surface, or is formed by a continuous curved surface and a finite surface with a profile circumscribed by the continuous curved surface; and in a SEM image with an overall visual field size of D_{V50} to 10D_{V50}, a quantity of observable finite surfaces in a single crystal grain is ≤ 5, and a ratio of a diameter dA of the finite surface to a diameter dV of the crystal grain satisfies dA/dV<0.5.

In some embodiments, the crystal grains are small monocrystals that have an irregular shape and form polycrystals. To be specific, molecules and atoms in the crystal grains are arranged regularly, and the crystal grains are monocrystals separated by independent crystal grain boundaries. D_{V50} refers to a corresponding particle size when a cumulative volume percentage of the particles reaches 50% in a volume cumulative distribution curve, physically meaning that the crystal grains having a particle size smaller than (or larger than) that particle size account for 50%. For example, D_{V50} can be conveniently measured in accordance with a particle size distribution laser diffraction method in GB/T 19077-2016 by using a laser particle size analyzer, for example, a laser particle size analyzer of Mastersizer 2000E from Malvern Panalytical Ltd. in UK.

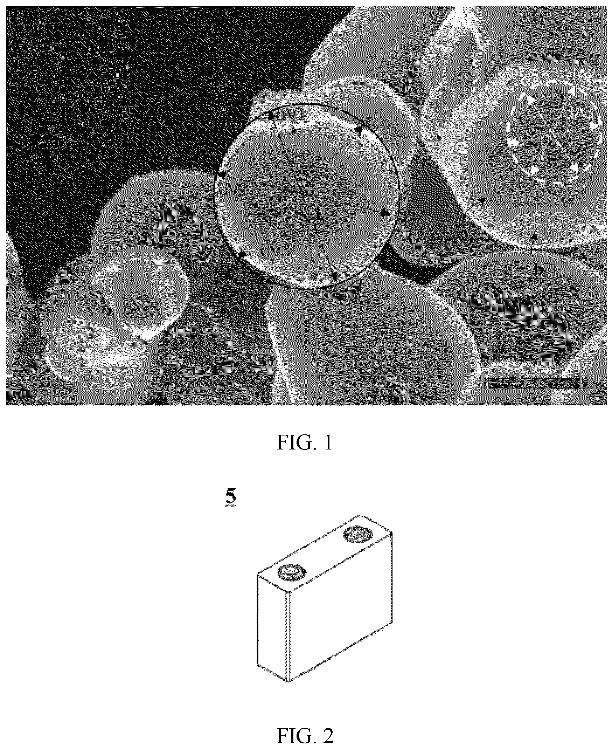

Referring to FIG. 1, it is a scanning electron microscope image of a spinel-type lithium and manganese containing composite oxide according to an embodiment of this application, and a schematic diagram of finite surface, finite surface diameter, and crystal grain diameter statistics. In FIG. 1, a represents a continuous curved surface, and b represents a finite surface. It can be seen that crystal grains of the spinel-type lithium and manganese containing composite oxide have a quasi-spherical morphology, and the finite surface has a small area proportion.

In some embodiments, a quantity of finite surfaces with the profile circumscribed by the continuous curved surface may be 1, 2, 3, 4, or 5. A case in which the surface of a single crystal grain is a continuous curved surface may also be understood as that the quantity of the finite surfaces with the profile circumscribed by the continuous curved surface is 0.

In some embodiments, if the quantity of the finite surfaces with the profile circumscribed by the continuous curved surface is 0, a value of dA/dV is also 0.

In addition, in this application, dA/dV is used to represent roundness of the crystal grain surface of the spinel-type lithium and manganese containing composite oxide. A smaller value of dA/dV indicates a smaller area proportion of a discontinuous curved surface on the crystal grain surface and a larger area proportion of the continuous curved surface, and thus, the crystal grains are more similar to spherical crystal grains.

In some embodiments, dA/dV<0.3.

In some embodiments, the value of dA/dV can be statistically obtained by the following method: still referring to FIG. 1, three diameters (every two of which form an included angle of 60±10°) of an ellipse circumscribing the crystal grain profile are dV1, dV2, and dV3, and an average value is taken as dV; three diameters (every two of which form an included angle of 60±10°) of an ellipse circumscribing the finite surface profile are dA1, dA2, and dA3, and an average value is taken as dA; and at least 50 crystal grains are counted, and the values of dA/dV of the counted crystal grains are respectively calculated and averaged to obtain an average value. The counted crystal grains satisfy the condition: in a SEM image with a visual field size of 5D_{V50} to 20D_{V50}, one or more regions in which the crystal grains are dense and gapless are randomly selected, and the crystal grains are counted from large to small, where the counting is stopped when an area sum of visual fields of the counted crystal grains reaches 80% of a total area of the dense region.

In this application, the quantity of the finite surfaces with the profile circumscribed by the continuous curved surface on the crystal grain surface of the spinel-type lithium and manganese containing composite oxide and the dA/dV are controlled within a specified range, so that the quasi-spherical morphology of the crystal grains can be controlled, thereby improving the stability of subsequent processing and application of the spinel-type lithium and manganese containing composite oxide, preventing the crystal grain surface of the spinel-type lithium and manganese containing composite oxide from cracking and being corroded due to stress concentration, reducing Mn dissolution, and reducing gas generation, thereby prolonging the service life of the secondary battery.

In some embodiments, M includes at least two of Na, Al, P, Mo, W, and Te, and 0<y<0.3. The spinel-type lithium and manganese containing composite oxide doped with at least two of the above elements can have a significantly increased entropy, thereby achieving better material stability.

In some embodiments, 0.001≤y≤0.1, or 0.005≤y≤0.05.

In some embodiments, no connected finite surfaces are present on the surface of a single crystal grain. It can be understood that if the finite surfaces on the surface of the spinel-type lithium and manganese containing composite oxide in this application are not connected, formation of sharp edges are avoided, effectively preventing corners on the crystal grain surface of the spinel-type lithium and manganese containing composite oxide from cracking or being corroded due to stress concentration during subsequent cell processing and use, thereby slowing down Mn dissolution of the spinel-type lithium and manganese containing composite oxide and reducing gas generation in the secondary battery.

In some embodiments, the ratio of the long diameter L to the short diameter S of the crystal grain of the spinel-type lithium and manganese containing composite oxide satisfies 1≤L/S≤1.3. The ratio L/S of the long diameter L to the short diameter S of the crystal grain has a minimum value of 1, meaning that the crystal grains are most similar to spherical crystal grains, and a smaller L/S means that the crystal grains are more similar to spherical crystal grains, helping to reduce stress concentration and improve the stability of the spinel-type lithium and manganese containing composite oxide.

In some embodiments, the value of L/S may be 1, 1.05, 1.1, 1.15, 1.2, 1.25, or 1.3.

In some embodiments, 1≤L/S≤1.2, or 1<L/S<1.1.

In some embodiments, the spinel-type lithium and manganese containing composite oxide has a monocrystal or quasi-monocrystal particle morphology. Each particle is formed by one or a plurality of crystal grains. It should be noted that when each particle is formed by one crystal grain, particles and crystal grains are equivalent, but when each particle is formed by a plurality of crystal grains, particles and crystal grains are not equivalent. In this embodiment, monocrystal means that a dispersed particle of the spinel-type lithium and manganese containing composite oxide contains only one crystal grain. Quasi-monocrystal (or pseudo-monocrystal) means that a dispersed particle of the spinel-type lithium and manganese containing composite oxide contains a few or a dozen crystal grains. A monocrystal or quasi-monocrystal lithium and manganese containing composite oxide has high mechanical strength, is not prone to breakage, and can improve the gas generation problem caused by particle breakage.

In this application, the long diameter L and the short diameter S of the crystal grain of the spinel-type lithium and manganese containing composite oxide can be measured using methods well known in the art. As an example, the following method can be used: still referring to FIG. 1, a major axis of an ellipse circumscribing the crystal grain profile is denoted as L, and a minor axis of an ellipse inscribing the crystal grain profile is denoted as S; at least 50 crystal grains are counted; and an average value is calculated. The counted crystal grains satisfy the condition: in a SEM image with a visual field size of 5D_{V50} to 20D_{V50}, one or more regions in which the crystal grains are dense and gapless are randomly selected, and the crystal grains are counted from large to small, where the counting is stopped when an area sum of visual fields of the counted crystal grains reaches 80% of a total area of the dense region.

In some embodiments, a ratio of an average crystal grain diameter d_{V50} to a median particle size by volume D_{V50} of a powder particle satisfies 0.3≤d_{V50}/D_{V50}≤1. The average crystal grain diameter d_{V50} is statistically obtained by the following method: in a SEM image with a visual field size of 5D_{V50} to 20D_{V50}, one or more regions in which the crystal grains are dense and gapless are randomly selected, and the crystal grains are counted from large to small, where the counting is stopped when an area sum of visual fields of the counted crystal grains reaches 80% of a total area of the dense region, the sizes of the crystal grains d1, d2, ..., and dn are counted, and the average crystal grain diameter is statistically calculated according to a volume distribution function: d_{V50}=[(d13+d23+...+dn3)/n](1/3). The statistical method for d1, d2, ..., and dn is the same as that for dV. d_{V50}/D_{V50} has a minimum value of 0 and a maximum value of 1. When d_{V50}/D_{V50}=1, the particles are monocrystals in the traditional academic sense, with one particle containing only one crystal grain. In this embodiment of this application, 0.3≤d_{V50}/D_{V50}≤1.

Further, 0.4≤d_{V50}/D_{V50}≤1, 0.5≤d_{V50}/D_{V50}≤1, or 0.6≤d_{V50}/D_{V50}≤1. d_{V50}/D_{V50}>0.4 indicates that the particles are similar to monocrystal particles, with few crystal grain boundaries that are likely to crack, reducing the probability of cracking, exposure of unstable new surfaces, and formation of edges during production, processing, and cell use, thereby further prolonging the service life of the secondary battery.

In some embodiments, d_{V50}/D_{V50} may be a range defined by any of the following values: 0.3, 0.4, 0.5, 0.6, 0.7, 0.8, 0.9, or 1.

In some embodiments, the D_{V50} of the spinel-type lithium and manganese containing composite oxide is 2 µm to 20 µm. The D_{V50} of the spinel-type lithium and manganese containing composite oxide being within the above range can achieve both good kinetic performance and long cycle life.

In some embodiments, the D_{V50} of the spinel-type lithium and manganese containing composite oxide may be a range defined by any of the following values: 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm.

In some embodiments, the D_{V50} of the spinel-type lithium and manganese containing composite oxide is 3 µm to 15 µm.

Another embodiment of this application further provides a preparation method of the foregoing spinel-type lithium and manganese containing composite oxide. The preparation method includes steps S110 to S130.

Step S110. Prepare raw materials according to the chemical composition of the spinel-type lithium and manganese containing composite oxide.

Step S120. Mix the raw materials and perform a first heat treatment in an oxygen-containing atmosphere to prepare an intermediate.

Step S130. Perform a second heat treatment on the intermediate in the oxygen-containing atmosphere.

The first heat treatment is performed at a temperature of T1 for 2 h to 50 h, and the second heat treatment is performed at a temperature of T2 for 0.5 h to 20 h. T1 and T2 satisfy: 800°C≤T1≤1100°C, T1-200°C≤T2≤T1, and T2≥800°C. T1 may be within a range defined by any of the following values: 800°C, 850°C, 900°C, 950°C, 1000°C, 1050°C, or 1100°C.

According to the preparation method of the foregoing spinel-type lithium and manganese containing composite oxide, the thermal treatment temperature and time are reasonably controlled, so that the prepared spinel-type lithium and manganese containing composite oxide has a quasi-spherical morphology, good stability, reduced Mn dissolution and reduced gas generation, and thus can prolong the service life when used in secondary batteries.

In some embodiments, T1 and T2 satisfy: T1-100°C≤T2≤T1. When T1 and T2 are controlled to satisfy the above condition, the prepared material is more similar to a spherical morphology.

In some embodiments, T1 and T2 satisfy: 850°C<T1<950°C. When T1 is controlled within the above range, the prepare spinel-type lithium and manganese containing composite oxide can achieve both good kinetic performance and good stability.

In some embodiments, after step S120 and before step S130, the preparation method further includes: a step of cooling a reaction system to room temperature to obtain the intermediate, where the room temperature is 20°C to 45°C. Through the above cooling step, the prepared spinel-type lithium and manganese containing composite oxide is more similar to a spherical morphology.

In some embodiments, a volume content of oxygen in the oxygen-containing atmosphere in steps S120 and S130 is greater than or equal to 20%.

In some embodiments, the oxygen-containing atmosphere is air.

In some embodiments, the raw materials include a lithium-containing compound and a manganese-containing compound.

In some embodiments, the lithium-containing compound includes at least one of lithium carbonate, lithium oxide, lithium hydroxide, and lithium nitrate.

In some embodiments, the lithium-containing compound includes lithium carbonate.

In some embodiments, the manganese-containing compound includes at least one of trimanganese tetroxide, manganese carbonate, manganese sesquioxide, and manganese hydroxide.

In some embodiments, the manganese-containing compound includes trimanganese tetroxide.

In some embodiments, the raw materials further include a doping element compound, where a doping element M in the doping element compound includes at least one of B, Na, Mg, Al, Si, P, K, Ti, V, Cr, Fe, Co, Ni, Cu, Zr, Mo, W, and Te.

In some embodiments, a Na-containing doping element compound includes one or more of sodium hydroxide, sodium carbonate, sodium nitrate, and sodium sulfate.

In some embodiments, an Al-containing doping element compound includes aluminum oxide, aluminum hydroxide, aluminum carbonate, and lithium metaaluminate.

In some embodiments, an Mg-containing doping element compound includes magnesium oxide, magnesium hydroxide, magnesium carbonate, and magnesium nitrate.

In some embodiments, a Te-containing doping element compound includes TeO₂, TeO₃, Te₂O₅, H₂TeO₃, and H₂TeO₅.

In some embodiments, a P-containing doping element compound includes NH₄H₂PO₄, (NH₄)₃PO₄, Li₃PO₄, and P₂O₅.

Another embodiment of this application further provides a spinel-type lithium and manganese containing composite oxide with a chemical composition of Li₁₊ₓM_{y}Mn_{2-x-y}O₄₋ₖ, where -0.1<x<0.2; 0≤y≤0.3; 0≤k≤0.2; M includes at least one of B, Na, Mg, Al, Si, P, K, Ti, V, Cr, Fe, Co, Ni, Cu, Zr, Mo, W, and Te; crystal grains of the spinel-type lithium and manganese containing composite oxide have a quasi-spherical morphology; a surface of a single crystal grain is formed by a continuous curved surface that is connected to a finite surface with a profile circumscribed by the continuous curved surface, or is a continuous curved surface; a quantity of observable finite surfaces with the profile circumscribed by the continuous curved surface in a SEM image of a single crystal grain is ≤ 5; and a ratio of a diameter dA of the finite surface to a diameter dV of the crystal grain satisfies dA/dV<0.5.

In addition, the following describes the secondary battery, battery module, battery pack, and electric apparatus of this application with appropriate reference to the accompanying drawings.

An embodiment of this application provides a secondary battery.

Typically, a secondary battery includes a positive electrode plate, a negative electrode plate, an electrolyte, and a separator. During charging and discharging of a battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between the positive and negative electrodes and to allow ions to pass through.

### Positive electrode plate

The positive electrode plate includes a positive electrode current collector and a positive electrode active material layer provided on at least one surface of the positive electrode current collector, where the positive electrode active material layer includes a positive electrode active material, and the positive electrode active material includes the foregoing spinel-type lithium and manganese containing composite oxide.

In an example, the positive electrode current collector includes two opposite surfaces in its thickness direction, and the positive electrode active material layer is provided on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by providing a metal material such as aluminum, aluminum alloy, nickel, nickel alloy, titanium, titanium alloy, silver, or silver alloy on a polymer material matrix. The polymer material matrix may include a matrix of polypropylene (PP), polyethylene terephthalate (PET), polybutylene terephthalate (PBT), polystyrene (PS), polyethylene (PE), or the like.

In some embodiments, the positive electrode active material further optionally includes a well-known positive electrode active material used for batteries in the art. In an example, the positive electrode active material optionally further includes at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One type of these positive electrode active materials may be used alone, or two or more types may be used in combination. Examples of the lithium transition metal oxide may include, but are not limited to, at least one of lithium cobalt oxide (for example, LiCoO₂), lithium nickel oxide (for example, LiNiO₂), lithium nickel cobalt oxide, lithium nickel cobalt aluminum oxide, lithium nickel cobalt manganese oxide, modified compounds thereof, and the like. The modified compound of lithium nickel cobalt aluminum oxide or lithium nickel cobalt manganese oxide may be represented by a molecular formula of Li₁₊ₐ₂Niₓ₂Co_{y2}M_{1-x2-y2}O₂, where 0.5<a2<2, 0<x2<1, 0≤y2≤1, and M includes at least one of Mn, Al, Ti, Mg, Zn, Zr, B, and Ca). An example of the olivine-structured lithium-containing phosphate may include but is not limited to at least one of lithium iron phosphate (for example, LiFePO₄ (or LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode active material layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. In an example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### Negative electrode plate

The negative electrode plate includes a negative electrode current collector and a negative electrode active material layer provided on at least one surface of the negative electrode current collector, and the negative electrode active material layer includes a negative electrode active material.

In an example, the negative electrode current collector includes two opposite surfaces in its thickness direction, and the negative electrode active material layer is provided on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by providing a metal material such as copper, copper alloy, nickel, nickel alloy, titanium, titanium alloy, silver, or silver alloy on a polymer material matrix. The polymer material matrix may include a matrix of polypropylene (PP), polyethylene terephthalate (PET), polybutylene terephthalate (PBT), polystyrene (PS), polyethylene (PE), or the like.

In some embodiments, the negative electrode active material may be a well-known negative electrode active material used for batteries in the art. In an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries. One type of these negative electrode active materials may be used alone, or two or more of them may be used in combination.

In some embodiments, the negative electrode active material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode active material layer further optionally includes another additive such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### Electrolyte

The electrolyte conducts ions between the positive electrode plate and the negative electrode plate. The type of the electrolyte is not specifically limited in this application, and may be selected as required. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bistrifluoromethanesulfonimide, lithium trifluoromethanesulfonate, lithium difluorophosphate, lithium difluorooxalate borate, lithium dioxalate borate, lithium difluoro(dioxalato)phosphate, and lithium tetrafluoro oxalato phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the liquid electrolyte further optionally includes an additive. For example, the additive may include a negative electrode film-forming additive or a positive electrode film-forming additive, or may include an additive capable of improving some performance of a battery, for example, an additive for improving overcharge performance of the battery, or an additive for improving high-temperature performance or low-temperature performance of the battery.

### Separator

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single- layer film or a multi-layer composite film. This is not particularly limited. When the separator is a multi-layer composite film, all layers may be made of same or different materials. This is not particularly limited.

In some embodiments, the positive electrode plate, the negative electrode plate, and the separator may be made into the electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic. Polypropylene, polybutylene terephthalate, polybutylene succinate, and the like may be listed as the plastic.

The secondary battery is not limited to any particular shape in this application, and may be cylindrical, rectangular, or of any other shapes. For example, FIG. 2 shows a secondary battery 5 of a rectangular structure as an example.

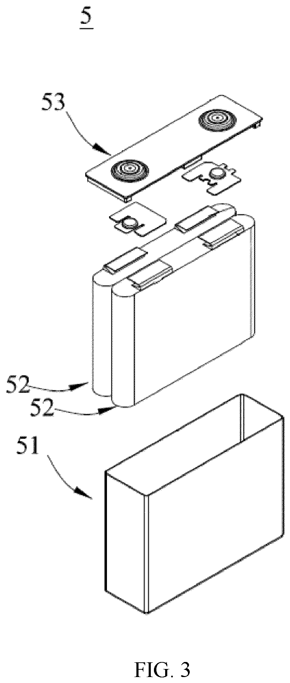

In some embodiments, referring to FIG. 3, the outer package may include a housing 51 and a cover plate 53. The housing 51 may include a base plate and a side plate connected to the base plate, and the base plate and the side plate enclose an accommodating cavity. The housing 51 has an opening in communication with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices based on actual needs.

In some embodiments, the secondary battery may be assembled into a battery module, and the battery module may include one or more secondary batteries. The specific quantity may be chosen by persons skilled in the art according to use and capacity of the battery module.

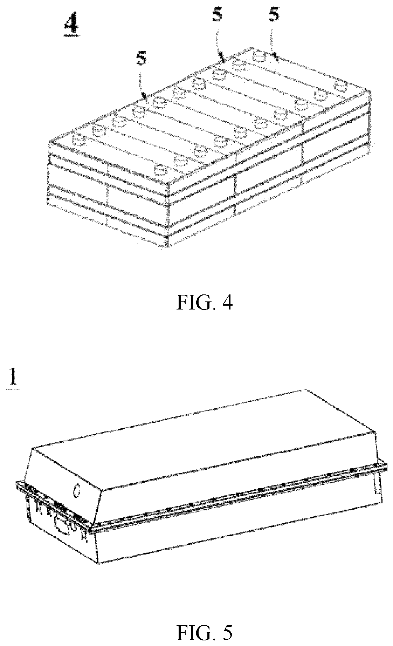

FIG. 4 shows a battery module 4 as an example. Referring to FIG. 4, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fixed by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

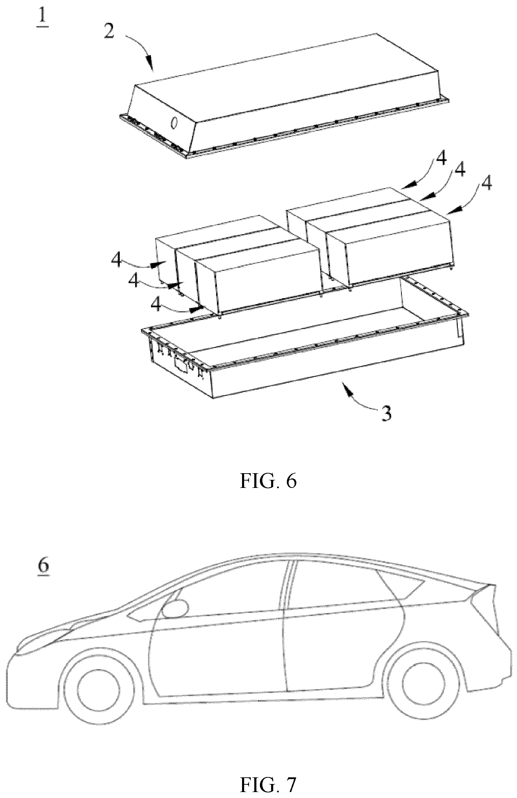

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer, and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The secondary battery, the battery module, or the battery pack may be selected for the electric apparatus based on requirements for using the electric apparatus.

FIG. 7 shows an electric apparatus 6 as an example. This electric apparatus 6 is a battery electric vehicle, a hybrid electric vehicle, a plug-in hybrid electric vehicle, or the like. To satisfy requirements of the electric apparatus for high power and high energy density of secondary batteries, a battery pack or a battery module may be used.

In another example, the apparatus may be a mobile phone, a tablet computer, a notebook computer, or the like. The apparatus usually requires to be light and thin, and may use a secondary battery as a power source.

### Examples

The following describes examples of this application. The examples described below are illustrative and merely used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

(1) Preparation of a lithium and manganese containing composite oxide: Li₂CO₃ and Mn₃O₄ powder at a corresponding stoichiometric ratio were weighed according to a target composition Li_{1.05}Mn_{2.00}O₄, and then mixed to uniformity to obtain raw material mixture powder; the mixture powder was heated to 950°C in an oxygen atmosphere, maintained at that temperature for 10 h, and then cooled to room temperature to obtain an intermediate; and the intermediate was heated to 800°C, maintained at that temperature for 2 h, and then cooled to room temperature to obtain a lithium and manganese containing composite oxide.
(2) Preparation of a positive electrode plate: The lithium and manganese containing composite oxide prepared in step (1), conductive carbon black and PVDF were mixed at a mass ratio of 96:2.5:1.5 and added with N-methylpyrrolidone (NMP), and then the resulting mixture was stirred to uniformity to obtain a positive electrode slurry. The positive electrode slurry was applied onto an aluminum foil, and drying was performed after coating to obtain a positive electrode plate. An amount of the lithium and manganese containing composite oxide loaded on the positive electrode plate is 0.02 g/cm².
(3) Preparation of a negative electrode plate: A negative electrode active material artificial graphite, a conductive agent carbon black (Super P), a binder styrene-butadiene rubber, and a thickener sodium carboxymethyl cellulose were mixed at a mass ratio of 96:1:1:2 and fully stirred in an appropriate amount of solvent deionized water to form a uniform negative electrode slurry, and the negative electrode slurry was evenly applied onto a surface of a negative electrode current collector copper foil, followed by drying and cold pressing to obtain a negative electrode plate. An amount of the negative electrode active material loaded on one side of the negative electrode current collector is 0.008 g/cm².
(4) Preparation of electrolyte: In an argon atmosphere glove box with a water content of less than 10 ppm, ethylene carbonate (EC) and ethyl methyl carbonate (EMC) of equal volumes were mixed to obtain an organic solvent, and then 1 mol/L LiPF₆ was uniformly dissolved in the organic solvent to obtain an electrolyte.
(5) Preparation of a pouch cell: A polypropylene film with a thickness of 12 µm was used as a separator, and the prepared positive electrode plate, separator, and negative electrode plate were placed in sequence, with the separator located between positive and negative electrode plates for separation, and then wound and packaged in an aluminum-plastic bag. The electrolyte was injected, followed by sealing and formation capacity to obtain a pouch cell.

### Examples 2 to 12 and Comparative examples 1 to 3:

Examples 2 to 12 and Comparative examples 1 to 3 differed from Example 1 in that (1) preparation parameters T1, t1, T2, and t2 of the lithium and manganese containing composite oxides were different.

### Examples 13 and 14:

Examples 13 and 14 differed from Example 1 in that (1) the types of lithium-containing compounds and manganese-containing compounds, T2, and t2 in the preparation of the lithium and manganese containing composite oxides were different.

### Examples 15 to 24:

Examples 15 to 24 differed from Example 1 in that chemical compositions of the lithium and manganese containing composite oxides were different, the lithium and manganese containing composite oxides contained a doping element M, the raw materials included doping element compounds, and T2 and t2 were different.

### Comparative example 4:

Comparative example 4 differed from Example 24 in that chemical compositions of the lithium and manganese containing composite oxides were different.

### Comparative example 5:

In Comparative example 5, a chemical composition of the lithium and manganese containing composite oxide is Li_{1.10}Mn_{1.9}Al_{0.1}O₄, and the preparation of the lithium and manganese containing composite oxide includes: Li₂CO₃, Mn₃O₄, and Al₂O₃ powder at a corresponding stoichiometric ratio were weighed according to a target composition, and then mixed to uniformity to obtain raw material mixture powder; and the mixture powder was heated to 900°C in an oxygen atmosphere, maintained at that temperature for 10 h, and then cooled to room temperature to obtain the lithium and manganese containing composite oxide.

The preparation parameters of the lithium and manganese containing composite oxides in Examples 1 to 24 and Comparative examples 1 to 5 were recorded in Table 1.

### Test part:

### Morphology test of lithium and manganese containing composite oxides:

A ZEISS sigma 300 scanning electron microscope was used for test, then the morphology of a sample was observed in accordance with standard JY/T010-1996, and a quantity of finite surfaces with the profile circumscribed by the continuous curved surface, dA/dV, L/S, and d_{V50} of the lithium and manganese containing composite oxide were statistically calculated. Specifically, an average value of three diameters (every two of which form an included angle of 60±10°) of an ellipse circumscribing the crystal grain profile was dV; an average value of three diameters (every two of which form an included angle of 60±10°) of an ellipse circumscribing the finite surface profile was dA; at least 50 crystal grains were counted; and values of dA/dV of the counted crystal grains were respectively calculated and averaged to obtain an average value. A major axis of the ellipse circumscribing the crystal grain profile was denoted as L; a minor axis of the ellipse inscribing the crystal grain profile was denoted as S; at least 50 crystal grains were counted; an average value was taken; and values of L/S of the crystal grains were calculated based on the statistically obtained L and S. The counted crystal grains satisfy the condition: in a SEM image with a visual field size of 5D_{V50} to 20D_{V50}, one or more regions in which the crystal grains were dense and gapless were randomly selected, and the crystal grains were counted from large to small, where the counting was stopped when an area sum of visual fields of the counted crystal grains reached 80% of a total area of the dense region. The average crystal grain diameter d_{V50} was statistically obtained by the following method: in a SEM image with a visual field size of 5D_{V50} to 20D_{V50}, one or more regions in which the crystal grains were dense and gapless were randomly selected, and the crystal grains were counted from large to small, where the counting was stopped when an area sum of visual fields of the counted crystal grains reached 80% of a total area of the dense region, the sizes of the crystal grains d1, d2, ..., and dn were counted, and the average crystal grain diameter was statistically calculated according to a volume distribution function: d_{V50}=[(d13+d23+...+dn3)/n](1/3). The statistical method for d1, d2, ..., and dn was the same as that for dV.

### Initial discharge capacity test of pouch cell:

At 25°C, the pouch cell was charged to a voltage of 4.35 V at a constant current of 1C, then charged to a current of 0.05C at a constant voltage of 4.35 V, left standing for 5 min, and then discharged to a voltage of 3.0 V at a constant current of 1C, where this discharge capacity was the first cycle discharge capacity of the secondary battery.

### High-temperature cycling performance test of pouch cell:

At 45°C, the pouch cell was charged to a voltage of 4.35 V at a constant current of 1C, then charged to a current of 0.05C at a constant voltage of 4.35 V, left standing for 5 min, and then discharged to a voltage of 3.0 V at a constant current of 1C. This was one charge-discharge cycle, and the discharge capacity in this cycle was the first cycle discharge capacity. The pouch cell was repeatedly charged and discharged until the discharge capacity decays to 80% of an initial value, and the number of cycles was the cycle life.

The morphology parameters of the lithium and manganese containing composite oxides in Examples 1 to 24 and Comparative examples 1 to 5 and the electrochemical performance of the corresponding secondary batteries were recorded in Table 2.

**Table 1 Preparation parameters of lithium and manganese containing composite oxides in Examples 1 to 24 and Comparative examples 1 to 5**

| No. | Preparation parameters | | | | | | | |
|---|---|---|---|---|---|---|---|---|
| | Chemical composition | Lithium-containing compound | Manganese-containing compound | Doping element compound | T1 (°C) | t1 (h) | T2 (°C) | t2 (h) |
| Comparative example 1 | Li_{1.05}Mn_{2.00}O₄ | Li₂CO₃ | Mn₃O₄ | / | 950 | 10 | 700 | 2 |
| Comparative example 2 | Li_{1.05}Mn_{2.00}O₄ | Li₂CO₃ | Mn₃O₄ | / | 950 | 10 | 800 | 2 |
| Example 1 | Li_{1.05}Mn_{2.00}O₄ | Li₂CO₃ | Mn₃O₄ | / | 950 | 10 | 800 | 5 |
| Example 2 | Li_{1.05}Mn_{2.00}O₄ | Li₂CO₃ | Mn₃O₄ | / | 950 | 10 | 800 | 20 |
| Example 3 | Li_{1.05}Mn_{2.00}O₄ | Li₂CO₃ | Mn₃O₄ | / | 950 | 10 | 850 | 2 |
| Example 4 | Li_{1.05}Mn_{2.00}O₄ | Li₂CO₃ | Mn₃O₄ | / | 950 | 10 | 900 | 2 |
| Example 5 | Li_{1.05}Mn_{2.00}O₄ | Li₂CO₃ | Mn₃O₄ | / | 950 | 10 | 900 | 5 |
| Example 6 | Li_{1.05}Mn_{2.00}O₄ | Li₂CO₃ | Mn₃O₄ | / | 950 | 10 | 950 | 2 |
| Example 7 | Li_{1.05}Mn_{2.00}O₄ | Li₂CO₃ | Mn₃O₄ | / | 950 | 10 | 950 | 0.5 |
| Comparative example 3 | Li_{1.05}Mn_{2.00}O₄ | Li₂CO₃ | Mn₃O₄ | / | 950 | 10 | 980 | 2 |
| Example 8 | Li_{1.05}Mn_{2.00}O₄ | Li₂CO₃ | Mn₃O₄ | / | 800 | 50 | 800 | 10 |
| Example 9 | Li_{1.05}Mn_{2.00}O₄ | Li₂CO₃ | Mn₃O₄ | / | 850 | 40 | 850 | 5 |
| Example 10 | Li_{1.05}Mn_{2.00}O₄ | Li₂CO₃ | Mn₃O₄ | / | 900 | 30 | 880 | 3 |
| Example 11 | Li_{1.05}Mn_{2.00}O₄ | Li₂CO₃ | Mn₃O₄ | / | 1100 | 2 | 950 | 1 |
| Example 12 | Li_{1.05}Mn_{2.00}O₄ | Li₂CO₃ | Mn₃O₄ | / | 1100 | 5 | 950 | 2 |
| Example 13 | Li_{1.05}Mn_{2.00}O₄ | Lithium oxide | MnCO₃ | / | 950 | 10 | 900 | 2 |
| Example 14 | Li_{1.05}Mn_{2.00}O₄ | Lithium hydroxide | Mn(OH)₂ | / | 950 | 10 | 900 | 2 |
| Example 15 | Li_{1.05}Al_{0.1}Mn_{1.90}O₄ | Li₂CO₃ | Mn₃O₄ | Al₂O₃ | 950 | 10 | 900 | 2 |
| Example 16 | Li_{1.00}Na_{0.05}Mn_{1.95}O₄ | Li₂CO₃ | Mn₃O₄ | NaOH | 950 | 10 | 900 | 2 |
| Example 17 | Li_{1.05}Mg_{0.1}Mn_{1.90}O₄ | Li₂CO₃ | Mn₃O₄ | MgO | 950 | 10 | 900 | 2 |
| Example 18 | Li_{1.05}Te_{0.1}Mn_{1.90}O₄ | Li₂CO₃ | Mn₃O₄ | Te₂O₅ | 950 | 10 | 900 | 2 |
| Example 19 | Li_{1.00}Na_{0.05}Al_{0.05}Mn_{1.90}O₄ | Li₂CO₃ | Mn₃O₄ | Al₂O₃, NaOH | 950 | 10 | 900 | 2 |
| Example 20 | Li_{1.05}P_{0.0005}Te_{0.0005}Mn_{1.999}O₄ | Li₂CO₃ | Mn₃O₄ | Te₂O₅, NH₄H₂PO₄ | 950 | 10 | 900 | 2 |
| Example 21 | Li_{1.05}P_{0.0025}Te_{0.0025}Mn_{1.995}O₄ | Li₂CO₃ | Mn₃O₄ | Te₂O₅, NH₄H₂PO₄ | 950 | 10 | 900 | 2 |
| Example 22 | Li_{1.05}P_{0.025}Te_{0.025}Mn_{1.95}O₄ | Li₂CO₃ | Mn₃O₄ | Te₂O₅, NH₄H₂PO₄ | 950 | 10 | 900 | 2 |
| Example 23 | Li_{1.05}P_{0.05}Te_{0.05}Mn_{1.90}O₄ | Li₂CO₃ | Mn₃O₄ | Te₂O₅, NH₄H₂PO₄ | 950 | 10 | 900 | 2 |
| Example 24 | Li_{1.05}P_{0.15}Te_{0.15}Mn_{1.70}O₄ | Li₂CO₃ | Mn₃O₄ | Te₂O₅, NH₄H₂PO₄ | 950 | 10 | 900 | 2 |
| Comparative example 4 | Li_{1.05}P_{0.2}Te_{0.21}Mn_{1.60}O₄ | Li₂CO₃ | Mn₃O₄ | Te₂O₅, NH₄H₂PO₄ | 950 | 10 | 900 | 2 |
| Comparative example 5 | Li_{1.10}Mn_{1.9}Al_{0.1}O₄ | Li₂CO₃ | Mn₃O₄ | Al₂O₃ | 900 | 10 | / | / |

**Table 2 Product morphologies of lithium and manganese containing composite oxides in Examples 1 to 24 and Comparative examples 1 to 5 and electrochemical performance of corresponding secondary batteries**

| No. | Product morphology parameter | | | | | Battery performance | |
|---|---|---|---|---|---|---|---|
| | Quantity of finite surfaces | dA/dV | L/S | d_{V50}/D_{V50} | D_{V50} | Initial discharge capacity (mAh/g) | High-temperature cycling performance (cls) |
| Comparative example 1 | Octahedron | | | | | 118 | 315 |
| Comparative example 2 | 4 | 0.62 | 1.26 | 0.39 | 10.9 | 117 | 388 |
| Example 1 | 4 | 0.50 | 1.20 | 0.41 | 11.3 | 117 | 480 |
| Example 2 | 4 | 0.41 | 1.14 | 0.43 | 11.5 | 116 | 513 |
| Example 3 | 4 | 0.38 | 1.12 | 0.46 | 11.4 | 115 | 534 |
| Example 4 | 4 | 0.30 | 1.10 | 0.47 | 12.0 | 113 | 599 |
| Example 5 | 4 | 0.19 | 1.06 | 0.49 | 12.3 | 113 | 617 |
| Example 6 | 4 | 0.00 | 1.03 | 0.48 | 13.4 | 110 | 597 |
| Example 7 | 4 | 0.21 | 1.09 | 0.44 | 12.6 | 112 | 591 |
| Comparative example 3 | Octahedron | | | | | 115 | 277 |
| Example 8 | 4 | 0.37 | 1.25 | 0.31 | 8.7 | 125 | 445 |
| Example 9 | 4 | 0.32 | 1.21 | 0.37 | 9.2 | 122 | 517 |
| Example 10 | 4 | 0.24 | 1.14 | 0.39 | 9.8 | 119 | 558 |
| Example 11 | 4 | 0.29 | 1.06 | 0.58 | 15.0 | 108 | 612 |
| Example 12 | 4 | 0.32 | 1.08 | 0.63 | 19.4 | 106 | 629 |
| Example 13 | 4 | 0.28 | 1.04 | 0.45 | 11.7 | 114 | 603 |
| Example 14 | 4 | 0.30 | 1.05 | 0.47 | 12.5 | 112 | 610 |
| Example 15 | 4 | 0.28 | 1.09 | 0.54 | 10.6 | 115 | 703 |
| Example 16 | 4 | 0.26 | 1.07 | 0.43 | 11.8 | 112 | 685 |
| Example 17 | 4 | 0.27 | 1.08 | 0.44 | 11.2 | 111 | 680 |
| Example 18 | 4 | 0.13 | 1.04 | 0.49 | 12.3 | 113 | 919 |
| Example 19 | 4 | 0.27 | 1.08 | *0.55* | 11.6 | 116 | 775 |
| Example 20 | 4 | 0.47 | 1.27 | 0.42 | 12.3 | 115 | 747 |
| Example 21 | 4 | 0.32 | 1.21 | 0.45 | 12.2 | 115 | 808 |
| Example 22 | 4 | 0.25 | 1.15 | 0.49 | 11.7 | 114 | 868 |
| Example 23 | 4 | 0.19 | 1.04 | 0.60 | 10.9 | 112 | 961 |
| Example 24 | 0 | 0.00 | 1.02 | 0.66 | 10.2 | 103 | 976 |
| Comparative example 4 | 0 | 0.00 | 1.02 | 0.78 | 10.1 | 91 | 934 |
| Comparative example 5 | Octahedron or irregular polycrystal | | | | | 105 | 604 |

From the relevant data in Tables 1 and 2, it can be seen that the quantities of finite surfaces with the profile circumscribed by the continuous curved surface in the lithium and manganese containing composite oxides in Examples 1 to 24 are 0 to 4, 0≤dA/dV≤0.5, 1.02≤L/S≤1.27, 0.31≤d_{V50}/D_{V50}≤0.78, and D_{V50} is 8.7 µm to 19.4 µm; the crystal grains of the lithium and manganese containing composite oxides have a quasi-spherical morphology; initial discharge capacities of the corresponding secondary batteries are 103 mAh/g to 125 mAh/g; the number of cycles until the discharge capacities decay to 80% at 45°C is 445 cls to 976 cls; and each secondary battery has high capacity and long cycle life. From the data of Examples 1 to 14 and Examples 15 to 24, it can be seen that the doped lithium and manganese containing composite oxides have a longer cycle life compared to lithium manganese oxides.

In Comparative examples 1 and 3, the thermal treatment conditions in the preparation of the lithium and manganese containing composite oxides are adjusted, and the crystal grains of the prepared lithium and manganese containing composite oxides are octahedral structures; the initial discharge capacities of the corresponding secondary batteries are 118 mAh/g and 115 mAh/g; the number of cycles until the discharge capacities decay to 80% at 45°C are 315 cycles and 277 cycles; the cycle lives of the secondary batteries are significantly deteriorated. The crystal grains of the lithium and manganese containing composite oxide prepared in Comparative example 2 have a quasi-spherical morphology, but dA/dV>0.5; the initial discharge capacity of the corresponding secondary battery is 117 mAh/g; the number of cycles until the discharge capacity decays to 80% at 45°C is 388 cycles; and the cycle life of the secondary battery is slightly longer than that of Comparative examples 1 and 3, but the cycling performance is significantly deteriorated compared to that of the secondary batteries in Examples 1 to 24.

In Comparative example 4, the chemical composition of the lithium and manganese containing composite oxide differs from that of the lithium and manganese containing composite oxide in this application; the quantity of finite surfaces with the profile circumscribed by the continuous curved surface in the lithium and manganese containing composite oxide is 0; L/S is 1.02; d_{V50}/D_{V50} is 0.78; D_{V50} is 10.1 µm; the crystal grains of the lithium and manganese containing composite oxide have a quasi-spherical morphology; the initial discharge capacity of the corresponding secondary battery is 91 mAh/g; and the number of cycles until the discharge capacity decays to 80% at 45°C is 934 cycles. It can be seen that the secondary battery prepared using the lithium and manganese containing composite oxide in Comparative example 4 has long cycle life but significantly reduced initial discharge capacity, making it difficult to balance the battery capacity and the cycling performance.

The lithium and manganese containing composite oxide Li_{1.10}Mn_{1.9}Al_{0.1}O₄ in Comparative example 5 is prepared using a conventional preparation process; when observed under a SEM, the crystal grains have an octahedral morphology or are irregular polycrystal structures; the initial discharge capacity of the corresponding secondary battery is 105 mAh/g; the number of cycles until the discharge capacity decays to 80% at 45°C is 604 cycles; and the discharge capacity and cycle life of the secondary battery are both inferior to that of the secondary batteries in Examples 15 to 24.

The technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application. It should be noted that persons of ordinary skill in the art may further make several modifications and improvements without departing from the concept of this application, and all these modifications and improvements fall within the protection scope of this application. Therefore, the protection scope of the patent of this application should be subject to the appended claims.

## Claims

1. A spinel-type lithium and manganese containing composite oxide with a chemical composition of Li₁₊ₓM_{y}Mn_{2-y}O₄₋ₖ, wherein
-0.1≤x≤0.2; 0≤y≤0.3; 0≤k≤0.2; M comprises at least one of B, Na, Mg, Al, Si, P, K, Ti, V, Cr, Fe, Co, Ni, Cu, Zr, Mo, W, and Te; crystal grains of the spinel-type lithium and manganese containing composite oxide have a quasi-spherical morphology; a surface of a single crystal grain is formed by a continuous curved surface that is connected to a finite surface with a profile circumscribed by the continuous curved surface, or is a continuous curved surface; a quantity of observable finite surfaces with the profile circumscribed by the continuous curved surface in a SEM image of a single crystal grain is ≤ 5; and a ratio of a diameter dA of the finite surface to a diameter dV of the crystal grain satisfies dA/dV<0.5.

2. The spinel-type lithium and manganese containing composite oxide according to claim 1, wherein dA/dV≤0.3.

3. The spinel-type lithium and manganese containing composite oxide according to claim 1 or 2, wherein no connected finite surfaces are present on the surface of a single crystal grain.

4. The spinel-type lithium and manganese containing composite oxide according to any one of claims 1 to 3, wherein a ratio of a long diameter L to a short diameter S of a crystal grain of the spinel-type lithium and manganese containing composite oxide satisfies 1≤L/S≤1.3; and optionally, 1≤L/S≤1.2, or 1≤L/S≤1.1.

5. The spinel-type lithium and manganese containing composite oxide according to any one of claims 1 to 4, wherein the spinel-type lithium and manganese containing composite oxide has a monocrystal or quasi-monocrystal particle morphology.

6. The spinel-type lithium and manganese containing composite oxide according to any one of claims 1 to 5, wherein a ratio of an average crystal grain diameter d_{V50} of the spinel-type lithium and manganese containing composite oxide to a median particle size by volume D_{V50} of powder particles counted based on volume distribution satisfies: 0.3≤d_{V50}/D_{V50}≤1, and optionally, 0.4≤d_{V50}/D_{V50}≤1, 0.5≤d_{V50}/D_{V50}≤1, or 0.6≤d_{V50}/D_{V50}≤1.

7. The spinel-type lithium and manganese containing composite oxide according to any one of claims 1 to 6, wherein the D_{V50} of the spinel-type lithium and manganese containing composite oxide is 2 µm to 20 µm, optionally 3 µm to 15 µm.

8. The spinel-type lithium and manganese containing composite oxide according to any one of claims 1 to 7, wherein M comprises at least two of Na, Al, P, Mo, W, and Te; 0<y<0.3; optionally, 0.001≤y≤0.1; and more optionally, 0.005≤y≤0.05.

9. A preparation method of the spinel-type lithium and manganese containing composite oxide according to any one of claims 1 to 8, comprising the following steps:
preparing raw materials according to the chemical composition of the spinel-type lithium and manganese containing composite oxide;
mixing the raw materials, and performing a first heat treatment in an oxygen-containing atmosphere to prepare an intermediate; and
performing a second heat treatment on the intermediate in the oxygen-containing atmosphere; wherein
the first heat treatment is performed at a temperature of T1 for 2 h to 50 h; the second heat treatment is performed at a temperature of T2 for 0.5 h to 20 h; and
T1 and T2 satisfy: 800°C≤T1≤1100°C, T1-200°C<T2<T1, and T2≥800°C.

10. The preparation method of the spinel-type lithium and manganese containing composite oxide according to claim 9, wherein T1 and T2 satisfy: T1-100°C<T2<T1.

11. The preparation method of the spinel-type lithium and manganese containing composite oxide according to claim 9 or 10, wherein T1 and T2 satisfy: 850°C<T1<950°C.

12. The preparation method of the spinel-type lithium and manganese containing composite oxide according to any one of claims 9 to 11, after the first heat treatment step, further comprising: a step of cooling a reaction system to room temperature to obtain the intermediate, wherein the room temperature is 20°C to 45°C.

13. The preparation method of the spinel-type lithium and manganese containing composite oxide according to any one of claims 9 to 12, wherein a volume content of oxygen in the oxygen-containing atmosphere is greater than or equal to 20%; and
optionally, the oxygen-containing atmosphere is air.

14. The preparation method of the spinel-type lithium and manganese containing composite oxide according to any one of claims 9 to 13, wherein the raw materials comprise a lithium-containing compound and a manganese-containing compound; and
optionally, the raw materials further comprise a doping element compound, wherein a doping element M in the doping element compound comprises at least one of B, Na, Mg, Al, Si, P, K, Ti, V, Cr, Fe, Co, Ni, Cu, Zr, Mo, W, and Te.

15. The preparation method of the spinel-type lithium and manganese containing composite oxide according to claim 14, wherein the lithium-containing compound comprises at least one of lithium carbonate, lithium oxide, lithium hydroxide, and lithium nitrate; and
the manganese-containing compound comprises at least one of trimanganese tetroxide, manganese carbonate, manganese sesquioxide, and manganese hydroxide.

16. A spinel-type lithium and manganese containing composite oxide with a chemical composition of Li₁₊ₓM_{y}Mn_{2-x-y}O₄₋ₖ, wherein
-0.1≤x≤0.2; 0≤y≤0.3; 0≤k≤0.2; M comprises at least one of B, Na, Mg, Al, Si, P, K, Ti, V, Cr, Fe, Co, Ni, Cu, Zr, Mo, W, and Te; crystal grains of the spinel-type lithium and manganese containing composite oxide have a quasi-spherical morphology; a surface of a single crystal grain is formed by a continuous curved surface that is connected to a finite surface with a profile circumscribed by the continuous curved surface, or is a continuous curved surface; a quantity of observable finite surfaces with the profile circumscribed by the continuous curved surface in a SEM image of a single crystal grain is ≤ 5; and a ratio of a diameter dA of the finite surface to a diameter dV of the crystal grain satisfies dA/dV<0.5.

17. A positive electrode plate, comprising the spinel-type lithium and manganese containing composite oxide according to any one of claims 1 to 8, or a spinel-type lithium and manganese containing composite oxide prepared by the preparation method of the spinel-type lithium and manganese containing composite oxide according to any one of claims 9 to 15.

18. A secondary battery, comprising the positive electrode plate according to claim 17.

19. A battery module, comprising the secondary battery according to claim 18.

20. A battery pack, comprising at least one of the secondary battery according to claim 18 and the battery module according to claim 19.

21. An electric apparatus, comprising at least one of the secondary battery according to claim 18, the battery module according to claim 19, and the battery pack according to claim 20.
